# EUROPÄISCHE PATENTANMELDUNG

(11) **EP 1 328 097 A1**
(43) Veröffentlichungstag der Anmeldung: **16.07.2003**
(21) Anmeldenummer: 03000422.0
(22) Anmeldetag: 10.01.2003
(51) Int. Cl.: H04L 12/58

(54) **Verfahren zur Behandlung von E-Mails**

(30) Priorität: 15.01.2002 DE 10201293
(71) Anmelder: Tenovis GmbH & Co. KG, 60326 Frankfurt (DE)
(72) Erfinder: Maier, Wolfgang, 63225 Langen (DE)
(74) Vertreter: Heinze, Ekkehard, Dipl.-Phys. Dr.

(57) **Zusammenfassung**

Verfahren zur Behandlung vom E-Mails (MAIL) in einer Kommunikationsanordnung, umfassend mindestens einen mit einem E-Mail-Account (ACC) versehenen E-Mail-Server (SERV) und mindestens ein mit diesem verbundenes Endgerät (TERM) zur Ausgabe der E-Mails, wobei in Abhängigkeit vom Ergebnis einer durch den E-Mail-Server und/oder das Endgerät erfolgten Kompatibilitätsprüfung auf Verarbeitungsfähigkeit einer Datenstruktur der E-Mail (MAIL) durch das Endgerät Weiterleitungs(FWD)- und/oder Speicheroperationen (SAV) durch den E-Mail-Server (SERV) und/oder das Endgerät (TERM) initiiert und/oder ausgeführt werden.

## Beschreibung

Die Erfindung betrifft ein Verfahren zur Behandlung von E-Mails nach dem Oberbegriff des Anspruches 1.

Die Übermittlung von Nachrichten und Informationen mittels elektronischer Post (E-Mail) gehört zum gegenwärtigen Stand der Technik und ist insbesondere bei Datenübertragungen zwischen Computersystemen Standard.

Neben der Entgegennahme von E-Mails mittels Computersystemen ist auch der Empfang durch spezielle Endgeräte als E-Mail-Terminals bekannt. Während die einschlägigen Computersysteme, insbesondere Personalcomputer, die Entgegennahme von E-Mails nur als eine mehr oder weniger wichtige Komponente weiter reichender Einsatzgebiete beinhalten, sind diese Endgeräte dafür ausgelegt, E-Mails in einfacher Form, insbesondere in Textform, entgegen zu nehmen und über ein entsprechendes Display anzuzeigen. Der gegenüber Personalcomputern sehr vereinfachte Aufbau von E-Mail-Endgeräten erlaubt es, E-Mails von einem fernen E-Mail-Server in einfacher Form herunter zu laden, ohne ein komplexes Betriebssystem neben einer komplizierten Hardware hochfahren und/oder warten zu müssen.

Zunehmend jedoch werden mittels E-Mail nicht mehr nur Textnachrichten verschickt. E-Mails enthalten neben einer Textnachricht, welche als Body bezeichnet wird, sehr häufig sogenannte Attachments. Dies sind in der Regel an den E-Mail-Body angehängte, in der Form separater Dateien vorliegende zusätzliche Informationen, die nur mit auf Personalcomputern lauffähigen Programmen decodiert bzw. weiterverarbeitet werden können.

E-Mail-Endgeräte sind zur Bearbeitung von Attachments wegen ihrer reduzierten, textorientierten Verarbeitungs- und Anzeigemöglichkeiten nicht geeignet.

E-Mails, die von einem E-Mail-Server unter Verwendung der derzeit üblichen Übertragungsprotokolle, wie beispielsweise POP3 oder IMAP auf entsprechende Clients, insbesondere E-Mail-Endgeräte, übertragen werden, werden im allgemeinen auf dem E-Mail-Account des E-Mail-Servers gelöscht, um dort Speicherplatz zu sparen, und stehen somit nach dem Übertragungsvorgang nicht mehr zur Verfügung. Erfolgt die Übertragung der E-Mail an ein E-Mail-Endgerät, das das der E-Mail zugeordnete Attachment nicht verarbeiten kann, sind die Informationen aus dem Attachment in der Regel verloren, da das Attachment innerhalb des E-Mail-Endgerätes nicht auswertbar und auf dem E-Mail-Server nicht mehr verfügbar bist.

Es besteht daher die Aufgabe, ein Verfahren zur Behandlung von E-Mails anzugeben, welches die dem Body der E-Mail zugeordneten und durch ein einfaches E-Mail-Endgerät nicht verarbeitbaren Attachments für eine weitere Verarbeitung sichert.

Die Lösung der Aufgabe erfolgt mit einem Verfahren zur Behandlung von E-Mails nach Anspruch 1.

Hierbei erfolgt entweder durch einen E-Mail-Server oder durch ein E-Mail-Endgerät oder durch beide eine Prüfung auf Kompatibilität der Datenstruktur der E-Mail in Bezug auf eine Verarbeitungskapazität des Endgerätes. Abhängig vom Ergebnis der Kompatibilitätsprüfung wird anschließend eine Weiterleitungsund/oder eine Speicheroperation durch den E-Mail-Server und/oder das E-Mail-Endgerät initiiert bzw. ausgeführt.

Ein wesentlicher Gedanke des erfindungsgemäßen Verfahrens ist es somit, vor einer Übermittlung einer E-Mail von einem E-Mail-Server an ein E-Mail-Endgerät zu prüfen, ob die Datenstruktur der E-Mail durch das E-Mail-Endgerät lesbar bzw. verarbeitbar ist. Diese Prüfung auf Kompatibilität der Datenstruktur der E-Mail zur technischen Ausstattung des E-Mail-Endgerätes kann auf Seiten des E-Mail-Servers, des E-Mail-Endgerätes oder durch beide erfolgen. Ergibt der Prüfvorgang, daß die vorliegende E-Mail nicht durch das E-Mail-Endgerät verarbeitet werden kann, wird die E-Mail auf dem entsprechenden E-Mail-Account des E-Mail-Servers gespeichert oder zu einem anderen E-Mail-Account (entweder des gleichen oder eines weiteren E-Mail-Servers) weitergeleitet.

Bei einer ersten Ausführungsvariante des erfindungsgemäßen Verfahrens erfolgt die Kompatibilitätsprüfung der Datenstruktur durch den E-Mail-Server. Diese Prüfung umfaßt mindestens eine Analyse des oder der an den Body angefügten Attachments. Innerhalb des E-Mail-Servers wird hierzu ein vorab auf dem E-Mail-Server abgelegtes, vorzugsweise innerhalb einer Konfigurationsdatei gespeichertes technisches Profil des dem E-Mail-Account zugeordneten E-Mail-Endgerätes als ein Kriterienkatalog zur Beurteilung der vorliegenden E-Mail herangezogen und auf diese Weise die Kompatibilität mit der vorliegenden Datenstruktur der E-Mail geprüft.

Hierdurch können bereits frühzeitig und auf einfache Art zum Teil umfangreiche und unnötige Datenübertragungen zwischen dem E-Mail-Server und dem E-Mail-Endgerät vermieden werden.

Nach einem positiven Resultat der Kompatibilitätsprüfung, insbesondere in Hinblick auf die Verarbeitbarkeit des Attachments, erfolgt eine Übermittlung der E-Mail aus dem E-Mail-Account des E-Mail-Servers an das E-Mail-Endgerät. Optional kann dies mit einem Löschvorgang der E-Mail auf dem E-Mail-Account verbunden werden, um Systemressourcen des E-Mail-Servers frei zu halten.

Ist das Resultat der Kompatibilitätsprüfung negativ, stimmt also insbesondere die Datenstruktur des/der Attachments der E-Mail nicht mit dem technischen Profil des E-Mail-Endgerätes überein, wird durch den E-Mail-Server ein diesbezügliches Signal an das E-Mail-Endgerät ausgegeben. Die Signalisierung kann insbesondere den Grund der Inkompatibilität der Datenstruktur zum technischen Profil des E-Mail-Endgerätes sowie Datum, Uhrzeit und Betreff der analysierten E-Mail umfassen. Vorzugsweise kann die Signalisierung als eine vom E-Mail-Server generierte, dem technischen Profil des E-Mail-Endgerätes entsprechende E-Mail ausgebildet sein.

Dadurch ist es möglich, auf dem E-Mail-Endgerät den Eingang einer nicht verarbeitbaren E-Mail auf dem E-Mail-Account des E-Mail-Servers auf Einrichtungen des E-Mail-Endgerätes, insbesondere einem Display, anzuzeigen. Zusätzlich dazu kann vom E-Mail-Endgerät bei Empfang einer diesbezüglichen Signalisierung ein optisches und/oder akustisches Signal generiert werden.

Parallel wird nach einem negativen Resultat ein Speichervorgang der E-Mail seitens des E-Mail-Servers initiiert, so daß die E-Mail späteren Zugriffen zur Verfügung steht. Dadurch sind Übertragungsvorgänge an weitere Clients weiterhin möglich.

Als eine weitere Ausgestaltung kann vorgesehen sein, daß durch den E-Mail-Server eine Separierung des Datenbestandes der E-Mail in den durch das E-Mail-Endgerät verarbeitbaren Textteil, den Body, einerseits und das Attachment andererseits erfolgt. Dies kann dadurch realisiert werden, daß nur der Textteil an das E-Mail-Endgerät übermittelt oder die E-Mail in getrennte Einzel-E-Mails geteilt wird, von denen die mit dem E-Mail-Endgerät kompatible E-Mail an das Endgerät übertragen und anschließend auf dem E-Mail-Server gelöscht wird. Durch diese Ausgestaltung wird eine ansonsten nicht durch das E-Mail-Endgerät verarbeitbare E-Mail für eine Ausgabe auf dem E-Mail-Endgerät aufbereitet und kann dort somit teilweise empfangen und angezeigt werden, ohne das die E-Mail auf dem E-Mail-Account gelöscht wird und damit verloren ist, bzw. als Ganzes vom E-Mail-Endgerät nicht verarbeitet wird.

Weitere Ausgestaltungen des erfindungsgemäßen Verfahrens betreffen Weiterleitungsoperationen zwischen verschiedenen E-Mail-Accounts des E-Mail-Servers und/oder zwischen verschiedenen E-Mail-Servern.

Hierbei wird bei Vorliegen eines negativen Resultates der Kompatibilitätsprüfung seitens des E-Mail-Servers entweder eine Kopier- oder eine Verschiebeoperation der E-Mail gestartet. Die betreffende E-Mail wird hierbei vom E-Mail-Account des E-Mail-Servers auf einen zweiten E-Mail-Account des gleichen E-Mail-Servers oder eines anderen E-Mail-Servers übertragen. In Abhängigkeit von einer vorher festgelegten Konfiguration liegt die E-Mail nach Abschluß des Weiterleitungsvorganges weiterhin im E-Mail-Account des E-Mail-Servers und als Kopie im zweiten E-Mail-Account, oder die E-Mail ist im E-Mail-Account gelöscht und zum zweiten E-Mail-Account verschoben worden.

Parallel zu bevorstehenden, in Ausführung befindlichen oder ausgeführten Weiterleitungsoperationen erfolgt durch den E-Mail-Server eine Ausgabe einer entsprechenden Signalisierung an das E-Mail-Endgerät. Dies kann in besonders einfacher Weise durch Generierung einer als E-Mail vorliegenden Textnachricht erfolgen, welche auf einem Display des E-Mail-Endgerätes angezeigt wird.

Bei einer weiteren Ausfürungsform der Signalisierung über Weiterleitungsoperationen des E-Mail-Servers an das E-Mail-Endgerät kann eine fortlaufende Übertragung des aktuellen Status einer Weiterleitungsoperation durch den E-Mail-Server generiert und an das E-Mail-Endgerät übertragen werden. Die fortlaufende Statusinformation kann dann auf dem Display des E-Mail-Endgerätes beispielsweise als graphische Verlaufsanzeige und/oder als Verlaufsprotokoll ausgegeben und zusätzlich innerhalb des E-Mail-Endgerätes gespeichert werden.

Nachfolgend werden Ausführungsformen des erfindungsgemäßen Verfahrens beschrieben, bei denen die Kompatibilitätsprüfung und/oder die Weiterleitungs- bzw. Speicheroperationen durch das E-Mail-Endgerät erfolgen bzw. veranlaßt werden. Hierbei werden Speicherung und/oder Weiterleitung serverseitig ausgeführt, aber durch das E-Mail-Endgerät initiiert. Damit entfällt eine serverseitige Speicherung einer Konfigurationsdatei, während die Operationen des E-Mail-Servers durch das E-Mail-Endgerät gesteuert werden.

Bei einer ersten Ausführungsform einer endgeräteseitigen Behandlung von E-Mails wird eine E-Mail durch einen E-Mail-Server an das dem E-Mail-Account zugeordneten E-Mail-Endgerät gesendet. Durch das E-Mail-Endgerät erfolgt eine Kompatibilitätsprüfung auf Verarbeitbarkeit der E-Mail. Bei einem positiven Resultat des Prüfvorganges erfolgt eine Anzeige der E-Mail beispielsweise auf dem Display des E-Mail-Endgerätes.

Bei einem negativen Resultat des Kompatibilitätstests erfolgt endgerätseitig eine Trennung der E-Mail in einen vom E-Mail-Endgerät verarbeitbaren und insbesondere anzeigbaren Textteil und in ein durch das E-Mail-Endgerät nicht verarbeitbares Attachment. Der Textteil wird durch das E-Mail-Endgerät dargestellt oder in einer anderen Weise ausgegeben. Damit verbunden wird optional eine Information über ein nicht darstellbares Attachment auf dem E-Mail-Endgerät angezeigt.

Parallel dazu wird durch das E-Mail-Endgerät eine Signalisierung an den E-Mail-Server rückübertragen, welche auf dem E-Mail-Server einen Speichervorgang initiiert und/oder einen Löschvorgang der sich innerhalb des E-Mail-Accounts vorhandenen E-Mail seitens des E-Mail-Servers aussetzt. Damit steht die E-Mail für weitere Zugriffe zur Verfügung.

Bei einer weiteren Ausgestaltung übermittelt das E-Mail-Endgerät an den E-Mail-Server eine Initalisierung eines Weiterleitungsvorganges der E-Mail vom E-Mail-Account zu einem zweiten E-Mail-Account, der auch auf einem anderen E-Mail-Server lokalisiert sein kann. Der Weiterleitungsvorgang kann auch hier als ein Kopiervorgang der E-Mail oder als ein Verschiebevorgang der E-Mail zwischen zwei E-Mail-Accounts realisiert werden. Der Verschiebevorgang spart Systemressourcen, insbesondere Speicherplatz des E-Mail-Servers. Seitens des E-Mail-Servers und/oder des zweiten E-Mail-Servers erfolgt eine Signalisierung über einen Status zur Ausführung anstehender, in Ausführung begriffener oder ausgeführter Weiterleitungsvorgänge an das E-Mail-Endgerät.

Die Signalisierung kann seitens des E-Mail-Endgerätes zu einer Status und/oder Verlaufsanzeige konvertiert, bzw. Endgeräteseitig zur Erstellung eines Verlaufsprotokolls gespeichert werden.

Weitere Ausgestaltungen des Verfahrens ergeben sich aus den Unteransprüchen sowie der nachfolgenden Erläuterung von Ausführungsbeispielen. Hierzu dienen die Flussdiagramme in den Abbildungen Fig. 1 bis Fig. 4. Es zeigen:
- Fig. 1: einen schematischen Überblick über den Ablauf einer durch eine serverseitige Kompatibilitätsprüfung ausgestalteten Verknüpfung zwischen einem E-Mail-Server und einem E-Mail-Endgerät,
- Fig. 2: einen schematischen Überblick über den Ablauf einer serverseitigen Weiterleitungsoperation einer E-Mail unter einer Signalisierung an das E-Mail-Endgerät,
- Fig. 3: einen schematischen Überblick über eine mit einer endgeräteseitigen Kompatibilitätsprüfung ausgestalteten Verknüpfung zwischen einem E-Mail-Server und einem E-Mail-Endgerät und
- Fig. 4: einen schematischen Überblick über einen Ablauf einer endgeräteseitig initiierten Weiterleitungsoperation, beispielhaft dargestellt zwischen zwei E-Mail-Servern.

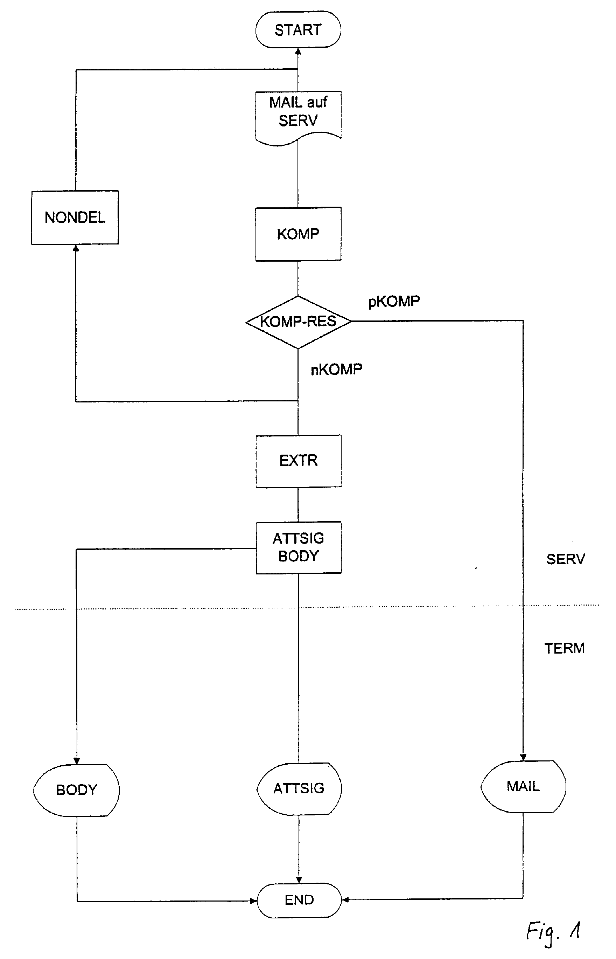

Fig. 1 zeigt den Ablauf eines erfindungsgemäßen Verfahrensablaufes zwischen einem E-Mail-Server SERV und einem E-Mail-Endgerät TERM. Eine E-Mail MAIL ist auf einem E-Mail-Account ACC abgelegt, welches auf einem E-Mail-Server SERV eingerichtet ist. Dieser E-Mail-Account ACC ist einem E-Mail-Endgerät TERM zugeordnet, an welchen alle auf dem E-Mail-Account ACC eintreffenden E-Mails MAIL übertragen werden.

Serverseitig wird eine Kompatibilitätsprüfung KOMP auf die E-Mail MAIL angewendet. Die Kriterien der Kompatibilitätsprüfung KOMP sind vorab festgelegt und serverseitig vorzugsweise in einer Konfigurationsdatei gespeichert. Diese enthält alle zur Beurteilung der Kompatibilität einer E-Mail MAIL in Bezug auf die technische Ausstattung und Verarbeitungskapazität eines E-Mail-Endgerätes TERM notwendigen Angaben. Diese betreffen beispielsweise technische Ausstattung, endgeräteseitig vorhandene Softwareausstattung, unterstützte Übertragungsprotokolle und dergleichen weitere, den Funktionsumfang des zugeordneten E-Mail-Endgerätes TERM kennzeichnende und in Hinblick auf ein Zusammenwirken mit dem E-Mail-Server SERV und zur Verarbeitung einer E-Mail MAIL unerlässliche Informationen.

Anhand der innerhalb der Konfigurationsdatei abgelegten Eigenschaften des E-Mail-Endgerätes TERM erfolgt mittels der Kompatibilitätsprüfung eine eindeutige Entscheidung als ein Kompatibilitätsresultat KOMP-RES, ob die jeweils vorliegende E-Mail MAIL durch das dem E-Mail-Account ACC des E-Mail-Servers SERV zugeordnete E-Mail-Endgerät TERM verarbeitet werden kann.

In der Folge eines positiven Resultates pKOMP der Kompatibilitätsprüfung der E-Mail MAIL wird der übliche Übermittlungsvorgang der E-Mail MAIL an das E-Mail-Endgerät TERM gestartet, die E-Mail MAIL unverändert an das E-Mail-Endgerät TERM übertragen, dort gespeichert, auf einem Display dargestellt oder in anderer Weise ausgegeben.

Bei einem negativen Resultat nKOMP der Kompatibilitätsprüfung KOMP erfolgt eine Trennung und/oder eine Extraktion EXTR der E-Mail MAIL zwischen einem nach Angaben der serverseitigen Konfigurationsdatei vom E-Mail-Endgerät TERM lesbaren Teil BODY, der im wesentlichen aus dem Textteil der E-Mail MAIL besteht, und einem gemäß Konfigurationsdatei vom E-Mail-Endgerät nicht lesbaren Teil ATT, der im wesentlichen aus dem Attachment der E-Mail MAIL aufgebaut ist.

Parallel dazu erfolgt eine Sperrung NONDEL der Löschfunktion DEL des E-Mail-Servers SERV, so daß die ursprüngliche E-Mail MAIL weiterhin auf dem E-Mail Account ACC weiterhin verfügbar ist.

Der gemäß Konfigurationsdatei lesbare Textteil BODY der E-Mail MAIL wird an das E-Mail-Endgerät TERM übertragen und steht auf dem E-Mail-Endgerät TERM für eine weitere Verarbeitung zur Verfügung. In Verbindung mit der Extraktion EXTR des lesbaren E-Mail-Teiles BODY erfolgt eine serverseitige Generierung einer Signalisierung über ein vorhandenes Attachment ATTSIG, die entweder als E-Mail-Text an das E-Mail-Endgerät TERM übersendet wird oder auf dem E-Mail-Endgerät TERM ein anderweitiges Signal auslöst.

Auf dem E-Mail-Endgerät TERM erscheinen im Ergebnis des gesamten Prozesses der lesbare Textteil BODY der E-Mail MAIL, der normal vom E-Mail-Endgerät TERM verarbeitet wird, und die Signalisierung ATTSIG, die auf ein nicht lesbares, auf dem E-Mail-Account ACC des E-Mail-Servers SERV bereitliegendes Attachment ATT verweist.

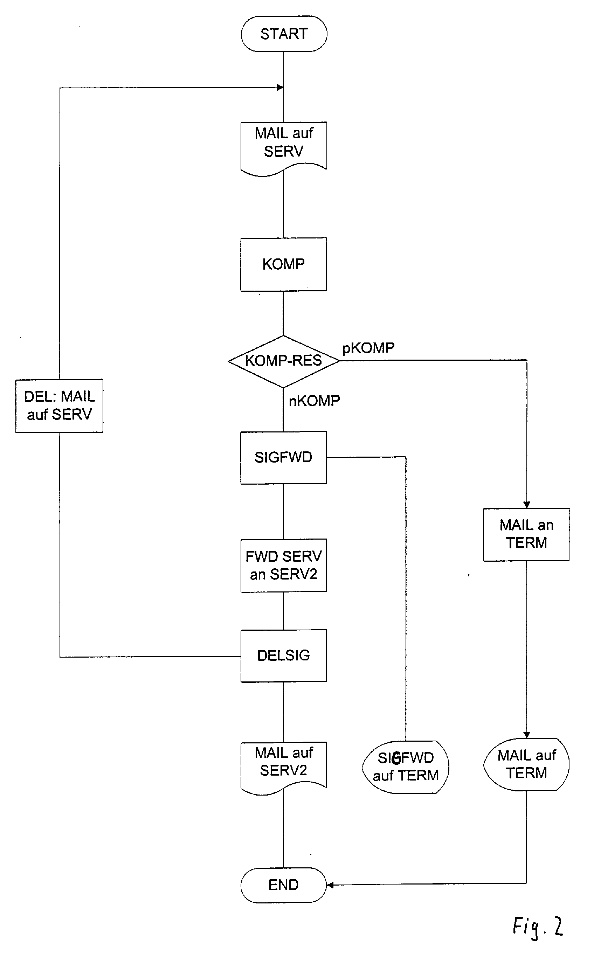

Fig. 2 stellt - in Anlehnung an Fig. 1 und die obige Beschreibung - schematisch den Ablauf einer serverseitigen und serverinitiierten Weiterleitungsoperation FWD einer E-Mail MAIL dar. Wie bereits beschrieben, befindet sich die E-Mail MAIL innerhalb des E-Mail-Accounts ACC auf dem E-Mail-Server SERV und unterliegt einer Kompatibilitätsprüfung KOMP.

Ist bei einem negativen Resultat nKOMP der Kompatibilitätsprüfung KOMP eine serverseitige Weiterleitungsoperation FWD vorgesehen, wird die E-Mail MAIL auf einen zweiten E-Mail-Account ACC2 kopiert. In Fig. 2 befindet sich der zweite E-Mail-Account ACC2 beispielhaft auf einem zweiten E-Mail-Server SERV2. Die Weiterleitungsoperation FWD der E-Mail MAIL kann als einer aus den üblichen Übertragungsprotokollen bekannter Forward-Prozeß realisiert sein.

In Abhängigkeit von vorher konfigurierten Bedingungen kann die Weiterleitungsoperation FWD als ein Kopieren oder ein Verschieben der E-Mail-Daten ausgeführt sein. Wird die Weiterleitungsoperation FWD als Verschiebevorgang realisiert, erfolgt anschließend eine Löschung der E-Mail MAIL auf dem E-Mail-Account ACC des E-Mail-Servers SERV, sobald eine ordnungsgemäße Übertragung der E-Mail MAIL auf das zweite E-Mail-Account ACC2 des zweiten E-Mail-Servers SERV2 durch eine Rückmeldung vom zweiten E-Mail-Server SERV2 verifiziert worden ist. Dazu erfolgt seitens des zweiten E-Mail-Servers SERV2 eine Generierung bzw. eine Übermittlung einer Löschsignalisierung DELSIG.

Gleichzeitig kann die Weiterleitungsoperation FWD mit einer Signalisierung SIGFW seitens des E-Mail-Servers SERV und/oder des zweiten E-Mail-Servers SERV2 verknüpft sein. Die Signalisierung SIGFW übermittelt Informationen über einen Status einer bevorstehenden, in Ausführung befindlichen oder abgeschlossenen Weiterleitungsoperation FWD und kann auf dem E-Mail-Endgerät TERM als Grundlage für die Erstellung einer Verlaufsanzeige, eines Übertragungsprotokolls oder dergleichen weitere Kontrollmittel dienen.

Als weitere Ausgestaltung der Weiterleitungsoperation FWD kann auch hier eine bereits beschriebene und in Fig. 1 dargestellte Extraktion EXTR der E-Mail MAIL in einen für das E-Mail-Endgerät TERM lesbaren Textteil BODY angewendet werden. Es erfolgt in diesem Falle serverseitig eine Übertragung des Textteiles BODY an das E-Mail-Endgerät TERM.

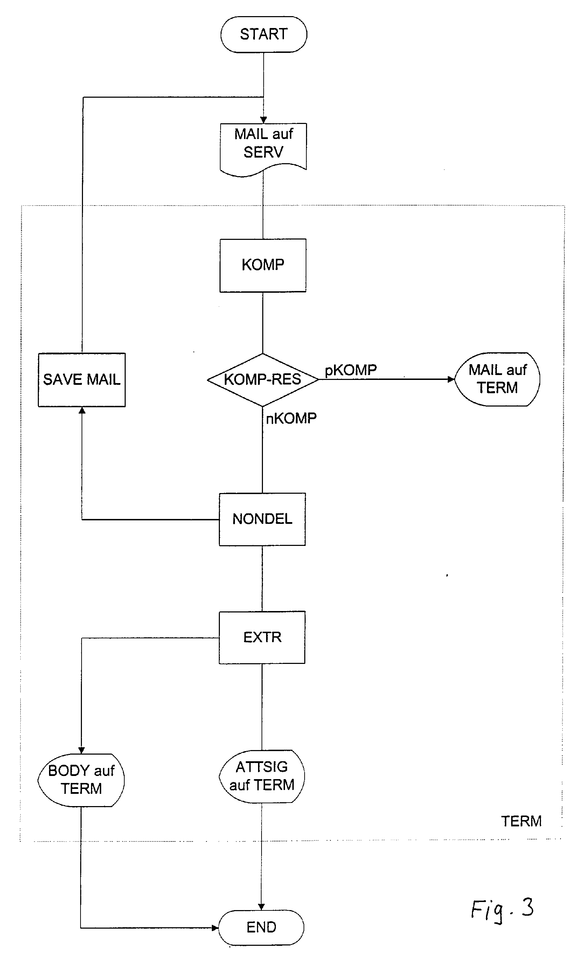

In Fig. 3 ist der Ablauf eines endgeräteinitiierten Speichervorgangs der E-Mail MAIL auf dem E-Mail-Server SERV dargestellt. Die serverseitig vorhandene E-Mail MAIL wird zunächst an das E-Mail-Endgerät TERM nach dem herkömmlichen Modus gesendet. Anschließend erfolgt eine endgerätseitige Überprüfung auf Kompatibilität KOMP, welche mit einem Kompatibilitätsresultat KOMP-RES abschließt. Bei einem positiven Resultat pKOMP erfolgt eine übliche Anzeige der E-Mail MAIL auf den dazu vorgesehenen Einrichtungen des E-Mail-Endgerätes TERM. Bei einem negativen Kompatibilitätsresultat nKOMP wird seitens des E-Mail-Endgerätes eine Signalisierung NONDEL an den E-Mail-Server SERV übermittelt. Seitens des E-Mail-Servers SERV wird daraufhin eine Löschung DEL der E-Mail MAIL ausgesetzt.

Als weitere Ausgestaltung des endgerätinitialisierten Speicherverfahrens für E-Mails kann eine endgerätseitige Extraktion EXTR des für das E-Mail-Endgerät TERM lesbaren Textteiles BODY erfolgen, wobei der Textteil BODY auf dem E-Mail-Endgerät TERM ausgegeben wird. Parallel kann auch die eine endgerätseitige Generierung eines Signals über das Vorliegen eines nicht darstellbaren Attachments erfolgen.

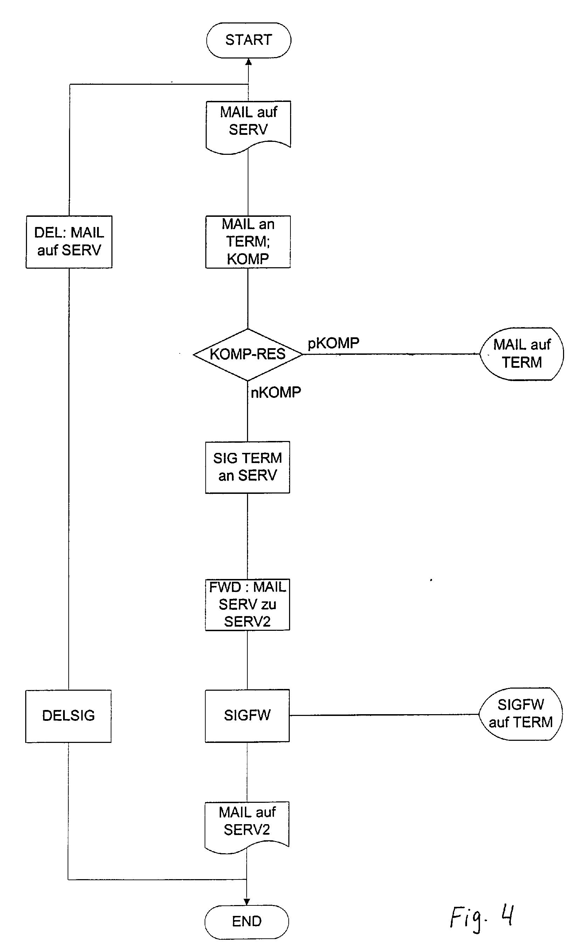

Bei einer in Fig. 4 dargestellten endgeräteseitig initiierten Weiterleitungsoperation FWD wird die E-Mail MAIL seitens des E-Mail-Servers SERV an das E-Mail-Endgerät TERM gesendet. Wie bereits beschrieben, erfolgt daraufhin eine endgerätseitige Kompatibilitätsprüfung KOMP, die ebenfalls mit einem Kompatibilitätsresultat KOMP-RES abschließt. Bei einem positiven Resultat pKOMP der Kompatibilitätsprüfung KOMP erfolgt eine Ausgabe der E-Mail MAIL am E-Mail-Endgerät TERM.

Bei einem negativen Resultat nKOMP der endgeräteseitigen Kompatibilitätsprüfung KOMP gibt das E-Mail-Endgerät TERM eine Signalisierung SIG an den E-Mail-Server SERV aus. Serverseitig erfolgt daraufhin der Start einer Weiterleitungsoperation FWD. Die im E-Mail-Account ACC des E-Mail-Servers SERV abgelegte E-Mail MAIL wird auf ein zweites E-Mail-Account ACC2 eines gegebenenfalls zweiten E-Mail-Servers SERV2 kopiert oder verschoben. Bei einem in Fig. 4 beispielhaft dargestellten Verschiebevorgang erfolgt nach erfolgreich beendetem Kopiervorgang eine Löschung DEL der auf dem E-Mail-Server SERV abgelegten E-Mail MAIL entweder als Folge einer durch den zweiten E-Mail-Server SERV2 generierten Löschanweisung DELSIG, wie in Fig. 4 dargestellt, oder als Folge eines seitens des zweiten E-Mail-Servers SERV2 an den E-Mail-Server SERV übermittelten Bestätigungssignals über einen erfolgreichen Abschluss der zwischen den E-Mail-Servern SERV und SERV2 erfolgten Übertragung der E-Mail MAIL.

Alle serverinitiierten, bzw. endgeräteinitiierte Speicher- und Weiterleitungsoperationen können mit einer Extraktion des durch das E-Mail-Endgerät TERM verarbeitbaren Textteils BODY der E-Mail MAIL kombiniert sein.

Die Ausführung der Erfindung ist nicht auf die oben beschriebenen Beispiele beschränkt, sondern ebenso in einer Vielzahl von Abwandlungen möglich, die im Rahmen fachgemäßen Handelns liegen.

### Bezugszeichenliste

- ACC: E-Mail-Account
- ACC2: zweiter E-Mail-Account
- ATT: Attachment
- ATTSIG: Signalisierung über ein vorhandenes Attachment
- BODY: vom Endgerät verarbeitbarer Textteil der E-Mail
- DEL: Löschvorgang
- DELSIG: Signalisierung über einen auszuführenden Löschvorgang
- EXTR: Extraktion des Textteiles einer E-Mail
- FWD: Weiterleitungsvorgang, Weiterleitungsoperation
- MAIL: E-Mail
- KOMP: Kompatibilitätsprüfung
- KOMPRES: Kompatibilitätsresultat
- nKOMP: negatives Kompatibilitätsresultat
- pKOMP: positives Kompatibilitätsresultat
- nKSIG: Signalisierung über ein negatives Kompatibilitätsresultat
- NONDEL: Signalisierung über einen nicht auszuführenden Löschvorgang
- SERV: E-Mail-Server
- SERV2: zweiter E-Mail-Server
- SIG: Signalisierung
- SIGFW: Signalisierung über einen auszuführenden, in Ausführung befindlichen oder abgeschlossenen Weiterleitungsvorgang
- TERM: Endgerät, E-Mail-Endgerät

## Patentansprüche

1. Verfahren zur Behandlung vom E-Mails (MAIL) in einer Kommunikationsanordnung, umfassend mindestens einen mit einem E-Mail-Account (ACC) versehenen E-Mail-Server (SERV) und mindestens ein mit diesem verbundenes Endgerät (TERM) zur Ausgabe der E-Mails,
**dadurch gekennzeichnet, dass**
in Abhängigkeit vom Ergebnis einer durch den E-Mail-Server und/oder das Endgerät erfolgten Kompatibilitätsprüfung auf Verarbeitungsfähigkeit einer Datenstruktur der E-Mail (MAIL) durch das Endgerät Weiterleitungs(FWD)- und/oder Speicheroperationen (SAV) durch den E-Mail-Server (SERV) und/oder das Endgerät (TERM) initiiert und/oder ausgeführt werden.

2. Verfahren nach Anspruch 1,
**dadurch gekennzeichnet, dass**
der E-Mail-Server (SERV) die Kompatibilitätsprüfung (KOMP) auf Verarbeitbarkeit der Datenstruktur eines der E-Mail (MAIL) zugeordneten Attachments (ATT) durch das Endgerät (TERM) ausführt.

3. Verfahren nach Anspruch 1 oder 2,
**dadurch gekennzeichnet, dass**
im Ansprechen auf ein negatives Resultat (nKOMP) der Kompatibilitätsprüfung (KOMP) eine diesbezügliche Signalisierung (nKSIG) durch den E-Mail-Server (SERV) an das Endgerät (TERM) erfolgt.

4. Verfahren nach Anspruch 3,
**dadurch gekennzeichnet, dass**
eine die Signalisierung (nKSIG) kennzeichnende Anzeige auf dem Endgerät (TERM) ausgeführt wird.

5. Verfahren nach einem der vorangehenden Ansprüche,
**dadurch gekennzeichnet, dass**
im Ansprechen auf ein negatives Resultat (nKOMP) der Kompatibilitätsprüfung (KOMP) die geprüfte E-Mail (MAIL) auf dem E-Mail-Account (ACC) des E-Mail-Servers (SERV) gespeichert gehalten wird.

6. Verfahren nach einem der vorangehenden Ansprüche,
**dadurch gekennzeichnet, dass**
durch den E-Mail-Server (SERV) eine Extrahierung und Übermittlung eines für das Endgerät (TERM) verarbeitbaren Teiles (BODY) der E-Mail (MAIL) an das Endgerät erfolgt.

7. Verfahren nach einem der vorangehenden Ansprüche,
**dadurch gekennzeichnet, dass**
im Ansprechen auf ein negatives Resultat der Kompatibilitätsprüfung (nKOMP) durch den E-Mail-Server (SERV) eine Weiterleitung (FWD) der geprüften E-Mail (MAIL) an einen weiteren E-Mail-Account (ACC2) und/oder einen weiteren E-Mail-Server (SERV2) entweder durch einen Kopier- oder Verschiebevorgang ausgeführt wird.

8. Verfahren nach Anspruch 7,
**dadurch gekennzeichnet, dass**
durch den E-Mail-Server (SERV) eine Signalisierung (SIGFW) über einen bevorstehenden oder in Ausführung befindlichen oder ausgeführten Kopier- oder Verschiebevorgang an das Endgerät (TERM) ausgegeben wird.

9. Verfahren nach Anspruch 8,
**dadurch gekennzeichnet, dass**
eine Anzeige der Signalisierung (SIGFW) durch das Endgerät (TERM) als Verlaufs- und Statusanzeige erfolgt und/oder eine solche endgerätseitig gespeichert wird.

10. Verfahren nach Anspruch 1,
**dadurch gekennzeichnet, dass**
im Ansprechen auf ein negatives Ergebnis der durch das Endgerät (TERM) ausgeführten Kompatibilitätsprüfung durch das Endgerät Speicherungs- und /oder Weiterleitungsoperationen des E-Mail-Servers (SERV) initiiert werden.

11. Verfahren nach Anspruch 10,
**dadurch gekennzeichnet, dass**
eine nach einer Übertragung vom E-Mail-Server (SERV) an das Endgerät (TERM) von diesem als inkompatibel erkannte E-Mail (MAIL) in einen vom Endgerät anzeig- und/oder verarbeitbaren Bestandteil (BODY) und einen vom Endgerät nicht verarbeitbaren Bestandteil (ATT) unterteilt wird, wobei der vom Endgerät verarbeitbare Teil auf dem Endgerät ausgegeben wird.

12. Verfahren nach Anspruch 11,
**dadurch gekennzeichnet, dass**
das Endgerät (TERM) nach Eingang der E-Mail (MAIL) einen den nicht verarbeitbaren Bestandteil (ATT) betreffenden Speichervorgang auf dem E-Mail-Server (SERV) initiiert oder an diesen eine Anweisung zur Unterdrückung eines Löschvorganges (NDEL) übermittelt.

13. Verfahren nach einem der Ansprüche 10 bis 12,
**dadurch gekennzeichnet, dass**
bei einer durch das Endgerät (TERM) als inkompatibel erkannten E-Mail (MAIL) durch das Endgerät ein Weiterleitungsvorgang (FWD) der E-Mail auf einen zweiten E-Mail-Account (ACC2) und/oder einen zweiten E-Mail-Server (SERV2) seitens des E-Mail-Servers (SERV) initiiert wird.

14. Verfahren nach Anspruch 13,
**dadurch gekennzeichnet, dass**
eine Signalisierung (SIGFW) über einen ausgeführten Weiterleitungsvorgang (FWD) seitens des E-Mail-Servers (SERV1) und/oder des zweiten E-Mail-Servers (SERV2) an das Endgerät (TERM) übermittelt wird.

15. Verfahren nach Anspruch 14,
**dadurch gekennzeichnet, dass** innerhalb des Endgerätes (TERM) ein die Signalisierung (SIG) kennzeichnender Datensatz zu einer am Endgerät vorhandenen Verlaufsanzeige konvertiert und/oder endgerätseitig gespeichert wird.
